# FASCICULE DE BREVET EUROPEEN

(11) **EP 2 733 064 B1**
(45) Date de publication et mention de la délivrance du brevet: **10.04.2019**
(21) Numéro de dépôt: 13192207.2
(22) Date de dépôt: 08.11.2013
(51) Int. Cl.: B64C 9/22, B64C 13/24, B64D 15/12

(54) **Dispositif mobile de guidage de câble, et aéronef comprenant un tel dispositif**
Mobile Kabelführungsvorrichtung und mit solch einer Vorrichtung ausgestattetes Luftfahrzeug
Mobile device for guiding a cable, and aircraft including such a device

(30) Priorité: 16.11.2012 FR 1203080
(43) Date de publication de la demande: 21.05.2014
(73) Titulaire: Dassault Aviation, 75008 Paris (FR)
(72) Inventeur: Stuber, Jean-Christophe, 78430 LOUVECIENNES (FR)
(74) Mandataire: Lavoix

(56) Documents cités:
- WO-A1-2012/004594
- US-A1- 2006 038 088
- US-A1- 2007 034 747
- US-A1- 2010 193 642
- US-A1- 2011 100 679

## Description

La présente invention concerne un dispositif de guidage de câble, du type comprenant un bras articulé comportant un premier et un deuxième tronçons articulés l'un à l'autre de façon à pouvoir pivoter l'un par rapport à l'autre autour d'un premier axe d'articulation, le dispositif de guidage comprenant en outre des moyens de guidage d'un câble le long du bras articulé.

On connaît des systèmes, en particulier des systèmes d'articulation de becs de bord d'attaque d'un aéronef sur l'aile de l'aéronef, comprenant deux éléments mobiles l'un par rapport à l'autre entre une position rapprochée et une position écartée. Lorsqu'un câble est utilisé pour lier électriquement ces deux éléments mobiles, sa longueur est dimensionnée de façon à être suffisante pour maintenir la liaison électrique lorsque les éléments mobiles sont en position écartée. Il en résulte que, lorsque les éléments mobiles sont en position rapprochée, le câble se replie sur lui-même, formant une « boucle ».

La géométrie de cette boucle de câble dépendant de nombreux paramètres, notamment de la fabrication du câble, de contraintes de montage du câble, qui varient d'un montage à l'autre, et de la température au sol ou en vol, elle ne peut pas être unique et répétable. De plus, sous l'effet des vibrations, le câble peut se déplacer avec des amplitudes très variables et ainsi entrer contact avec une structure ou un aménagement adjacent. Or de tels contacts sont indésirables, car ils peuvent générer des usures du câble et/ou de la structure, engendrant des coûts de maintenance supplémentaires, et éventuellement des dysfonctionnements.

On notera plus particulièrement que de tels contacts sont à proscrire à bord des aéronefs, en raison des coûts de maintenance particulièrement élevés qu'ils entraîneraient, et de la gravité des conséquences des dysfonctionnements qu'ils pourraient entraîner.

Pour ces raisons, il est nécessaire de pouvoir maîtriser la géométrie de la boucle en tout point de sa trajectoire et pour tout le spectre vibratoire auquel le câble peut être soumis.

A cet effet, il a été développé des dispositifs de guidage du type précité. Leurs bras articulés sont adaptés pour être fixé, à une extrémité, à l'un des éléments mobiles et, à l'extrémité opposée, à l'autre élément

Des exemples de l'art antérieur sont donnés par les documents WO2012004594, US2011100679, US2007034747, US2010193642 et US2006038088.

Cependant, les dispositifs existant ne donnent pas entière satisfaction. En effet, il a été observé qu'il existait un risque important d'usure avancée du câble guidé au niveau des articulations des bras.

En outre, lorsque ces dispositifs sont intégrés à un système d'articulation d'un bec de bord d'attaque d'aéronef sur une aile de l'aéronef, ils perturbent souvent le flux aérodynamique.

Un objectif de l'invention est de permettre le guidage d'un câble liant deux éléments mobiles l'un par rapport à l'autre en minimisant les risques d'usure du câble.

D'autres objectifs sont de minimiser l'encombrement de la boucle de câble lorsque les éléments mobiles sont en position rapprochée, et de permettre le guidage d'un câble liant un bec de bord d'attaque d'un aéronef à une aile de l'aéronef en minimisant la perturbation du flux aérodynamique occasionnée par le guidage du câble.

A cet effet, l'invention a pour objet un dispositif de guidage du type précité, dans lequel les moyens de guidage comprennent une première bobine spiralée orientée suivant un premier axe d'enroulement, pour l'enroulement du câble autour de ladite première bobine spiralée en formant au moins une spire, la première bobine spiralée comprenant un organe d'espacement pour maintenir les enroulements successifs du câble autour du premier axe d'enroulement espacés les uns des autres suivant le premier axe d'enroulement.

Selon l'invention, le dispositif de guidage présente également les caractéristiques suivantes:
- le deuxième tronçon est une bielle, articulée au premier tronçon par l'une de ses extrémités, et le bras articulé comprend un troisième tronçon, articulé à l'autre extrémité de la bielle de façon à pouvoir pivoter par rapport au deuxième tronçon autour d'un deuxième axe d'articulation,
- les premier et deuxième axes d'articulation sont sécants,
- le troisième tronçon présente une rainure de réception du câble, débouchant à l'opposé du point d'intersection des premier et deuxième axes d'articulation.

Selon des modes de réalisation préférés de l'invention, le dispositif de guidage présente également l'une ou plusieurs des caractéristiques suivantes, prise(s) isolément ou suivant toute(s) combinaison(s) techniquement possible(s):
- les moyens de guidage comprennent une deuxième bobine spiralée orientée suivant un deuxième axe d'enroulement, pour l'enroulement du câble autour de ladite deuxième bobine spiralée en formant au moins une spire, la deuxième bobine spiralée comprenant un organe d'espacement pour maintenir les enroulements successifs du câble autour du deuxième axe d'enroulement espacés les uns des autres suivant le deuxième axe d'enroulement,
- le troisième tronçon est une bielle, articulée au deuxième tronçon par l'une de ses extrémités, et le bras articulé comprend un quatrième tronçon, articulé à l'autre extrémité de la bielle de façon à pouvoir pivoter par rapport au troisième tronçon autour d'un troisième axe d'articulation,

- les premier, deuxième et troisième axes d'articulation sont sensiblement concourants,
- les moyens de guidage comprennent une troisième bobine spiralée orientée suivant un troisième axe d'enroulement, pour l'enroulement du câble autour de ladite troisième bobine spiralée en formant au moins une spire, la troisième bobine spiralée comprenant un organe d'espacement pour maintenir les enroulements successifs du câble autour du troisième axe d'enroulement espacés les uns des autres suivant le troisième axe d'enroulement,
- le quatrième tronçon comprend des moyens de fixation du bras articulé à un rail de guidage d'un bec de bord d'attaque d'aéronef,
- le premier tronçon comprend des moyens de fixation du bras articulé à un élément de structure d'une aile d'aéronef,
- la ou chaque bobine spiralée comprend une gorge hélicoïdale de réception du câble, ayant pour axe l'axe d'enroulement.
- la ou chaque bobine spiralée comprend une âme et une nervure hélicoïdale faisant saillie radialement depuis l'âme, la nervure hélicoïdale délimitant la gorge hélicoïdale et formant l'organe d'espacement,
- la première bobine spiralée est montée fixe en rotation autour du premier axe d'enroulement sur le deuxième tronçon,
- la deuxième bobine spiralée est montée fixe en rotation autour du deuxième axe d'enroulement sur le troisième tronçon,
- la troisième bobine spiralée est montée fixe en rotation autour du troisième axe d'enroulement sur le troisième tronçon,
- le premier axe d'enroulement coïncide avec le premier axe d'articulation,
- le deuxième axe d'enroulement coïncide avec le deuxième axe d'articulation, et
- le troisième axe d'enroulement coïncide avec le troisième axe d'articulation.

L'invention a également pour objet un aéronef comprenant deux éléments mobiles l'un par rapport à l'autre, un dispositif électrique logé dans l'un desdits éléments mobiles, un câble électrique d'alimentation du dispositif électrique, et un dispositif de guidage tel que défini ci-dessus, pour le guidage du câble d'alimentation entre les deux éléments mobiles.

Selon des modes de réalisation préférés de l'invention, l'aéronef présente également l'une ou plusieurs des caractéristiques suivantes, prise(s) isolément ou suivant toute(s) combinaison(s) techniquement possible(s) :
- un premier desdits éléments mobiles est une aile de l'aéronef, et le deuxième élément mobile est un bec de bord d'attaque, articulé à l'aile, premier, deuxième et troisième axes d'articulation se coupent en un point situé sensiblement sur un axe de rotation des éléments mobiles l'un par rapport à l'autre,
   et
- l'aéronef comprend un rail de guidage du bec de bord d'attaque entre une position rétractée, dans laquelle il est accolé à l'aile, et une position déployée, dans laquelle il est à distance de l'aile, et le dispositif de guidage est adapté pour que, en position déployée du bec, le troisième tronçon est disposé au-dessus du rail de guidage.

L'invention a également pour objet un procédé de guidage d'un câble liant deux éléments mobiles l'un par rapport à l'autre, le procédé comprenant les étapes suivantes :
- fourniture d'un dispositif de guidage tel que défini ci-dessus,
- fixation d'une extrémité du bras articulé à l'un des éléments mobiles, et de l'extrémité opposée du bras articulé à l'autre élément mobile,
- enroulement du câble autour de la ou chaque bobine spiralée, de façon à former au moins une spire, les enroulements successifs du câble autour du premier axe d'enroulement étant espacés les uns des autres suivant le premier axe d'enroulement, et
- déplacement des éléments mobiles l'un par rapport à l'autre, le câble demeurant enroulé autour de la ou chaque bobine spiralée, les enroulements successifs du câble demeurant espacés les uns des autres suivant le premier axe d'enroulement.

D'autres caractéristiques et avantages de l'invention apparaîtront à la lecture de la description qui va suivre, donnée uniquement à titre d'exemple et faite en se référant aux documents cités, dans lesquels :
- la Figure 1 est une vue schématique en élévation d'un système d'articulation d'un bec de bord d'attaque d'aéronef sur une aile de l'aéronef, intégrant un dispositif de guidage selon une première variante de l'invention, le bec de bord d'attaque étant dans une position déployée,
- la Figure 2 est une vue similaire à la Figure 1, le bec de bord d'attaque étant dans une position rétractée.
- la Figure 3 est une vue de dessus en perspective du dispositif de guidage de la Figure 1, dans une configuration dépliée,
- la Figure 4 est une vue similaire à celle de la Figure 3, le dispositif de guidage étant dans une configuration repliée,
- la Figure 5 est une vue, similaire à celle de la Figure 3, d'un dispositif de guidage selon une deuxième variante, et
- la Figure 6 est une vue, similaire à celle de la Figure 3, d'un dispositif de guidage selon une troisième variante.

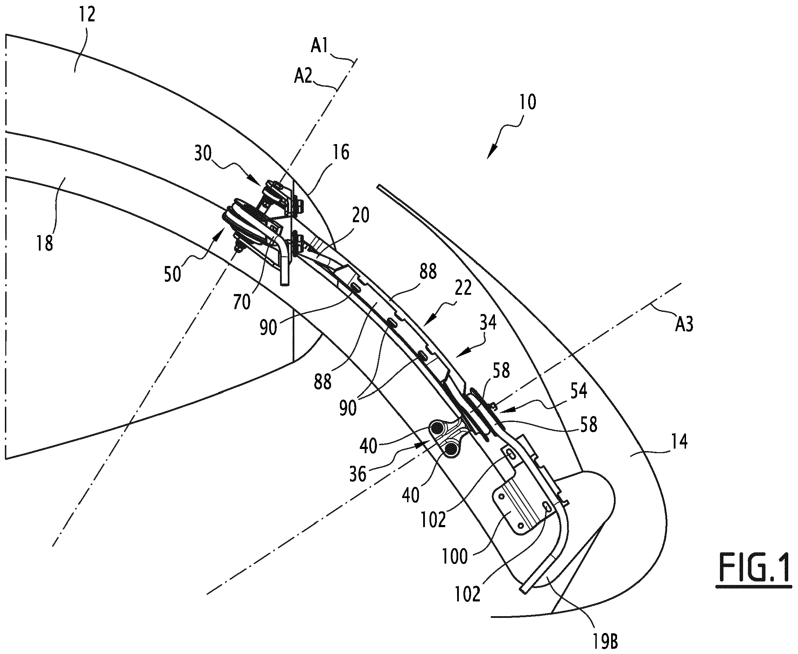

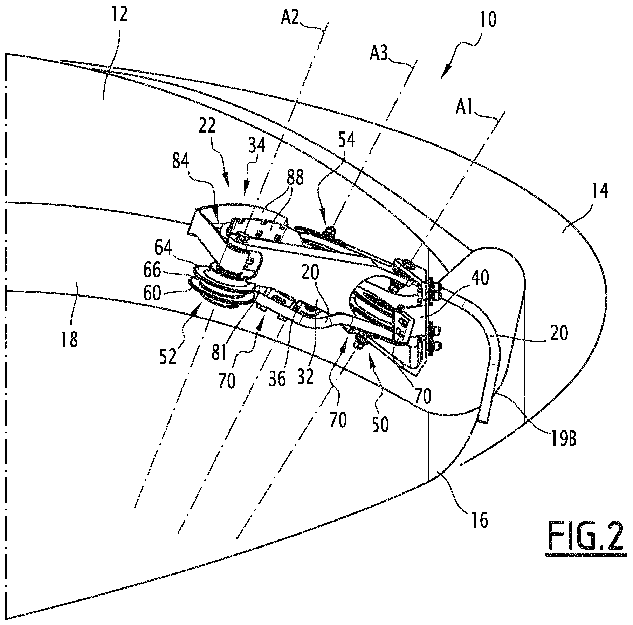

Le système d'articulation 10, représenté sur les Figures 1 et 2, fait partie d'un aéronef (non représenté). Il comprend une aile 12 et un bec de bord d'attaque 14, le bec 14 étant monté sur l'aile 12 de manière à être mobile relativement à cette dernière entre une position rétractée, visible sur la Figure 2, dans laquelle il est accolé à l'aile 12, et une position déployée, visible sur la Figure 1, dans laquelle il est à distance de l'aile 12.

De façon connue, l'aile 12 présente un bord d'attaque 16 orienté vers l'avant de l'aéronef. Ce bord d'attaque 16 est destiné à séparer le flux d'air incident sur l'aile 12 entre un filet d'air longeant l'intrados de l'aile 12, et un filet d'air longeant l'extrados de l'aile 12. Le bec 14 est monté mobile sur ce bord d'attaque 16 de façon à, lorsqu'il est en position déployée, améliorer la portance de l'aile 12 à basse vitesse.

Le système 10 comprend également un rail 18 de guidage du bec 14 entre ses positions déployée et rétractée.

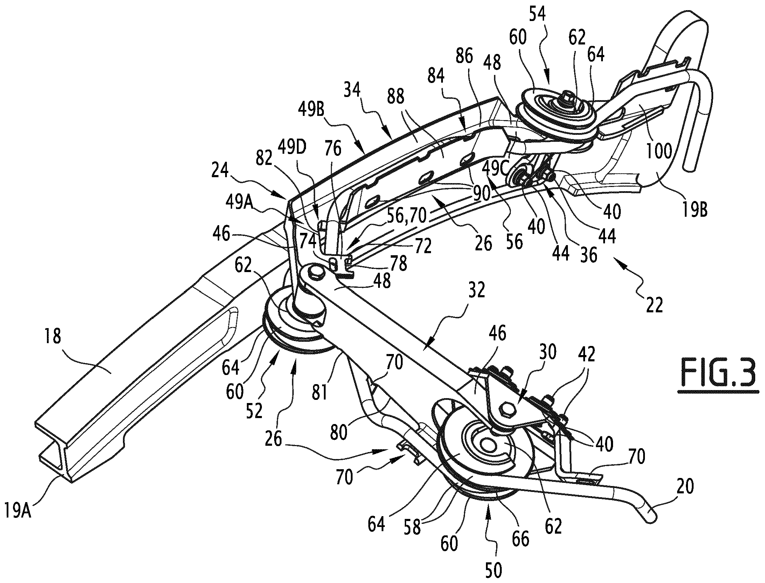

Ce rail 18 s'étend d'une extrémité proximale 19A (Figure 3) de liaison à l'aile 12, à une extrémité distale 19B (Figure 3) de liaison au bec 14.

Le rail 18 est arqué autour d'un axe de courbure (non représenté). Il est monté mobile en rotation relativement à l'aile 12 autour de cet axe de courbure.

Le rail 18 est par ailleurs fixe relativement au bec 14. Ainsi, l'axe de courbure du rail 18 constitue également un axe de rotation du bec 14 relativement à l'aile 12.

Le système 10 comprend enfin un câble 20 de liaison électrique de l'aile 12 au bec 14, et un dispositif 22 de guidage du câble 20 entre l'aile 12 et le bec 14.

Le câble 20 est typiquement raccordé électriquement à une sonde de température, ou à un dispositif de dégivrage (non représentés), logé dans le bec 14, de façon à l'alimenter en énergie électrique.

En référence à la Figure 3, le dispositif de guidage 22 comprend un bras articulé 24, et des moyens 26 de guidage du câble 20 le long du bras articulé 24.

Le dispositif de guidage 22 comprend une pluralité de tronçons 30, 32, 34, 36 articulés les uns aux autres.

La pluralité de tronçons 30, 32, 34, 36 comprend des tronçons d'extrémité 30, 36, définissant chacun une extrémité du bras articulé 24, et des tronçons intermédiaires 32, 34, intercalés entre les tronçons d'extrémité 30, 36.

Chaque tronçon d'extrémité, respectivement 30, 36, est articulé à un seul autre tronçon, respectivement 32, 34.

Chaque tronçon d'extrémité 30, 36 présente par ailleurs des orifices 40 pour la fixation du tronçon d'extrémité, respectivement 30, 36, à l'aile 12, respectivement au rail de guidage 18. Des organes de fixation 42 sont engagés dans les orifices 40 d'un premier tronçon d'extrémité 30 et assurent la fixation dudit premier tronçon d'extrémité 30 à un élément de structure (non représenté) de l'aile 12, et des organes de fixation 44 sont engagés dans les orifices 40 du deuxième tronçon d'extrémité 36 et assurent la fixation dudit deuxième tronçon d'extrémité 36 au rail de guidage 18. Ces organes de fixation 42, 44 sont typiquement, comme représenté, des boulons.

Le premier tronçon d'extrémité 30 est ainsi fixe relativement à l'aile 12, et le deuxième tronçon d'extrémité 36 est fixe relativement au bec 14.

Chaque tronçon intermédiaire, respectivement 32, 34, est articulé à deux autres tronçons, respectivement 30, 34 et 32, 36, encadrant ledit tronçon intermédiaire. Chaque tronçon intermédiaire 32, 34 présente en particulier deux extrémités 46, 48 opposées, et est articulé auxdits autres tronçons par lesdites extrémités 46, 48. Chaque tronçon intermédiaire 32, 34 forme ainsi une bielle.

Dans l'exemple représenté, les tronçons intermédiaires 32, 34 sont au nombre de deux. Un premier tronçon intermédiaire 32 est articulé au premier tronçon d'extrémité 30 et au deuxième tronçon intermédiaire 34. Le deuxième tronçon intermédiaire 34 est articulé au premier tronçon intermédiaire 32 et au deuxième tronçon d'extrémité 36.

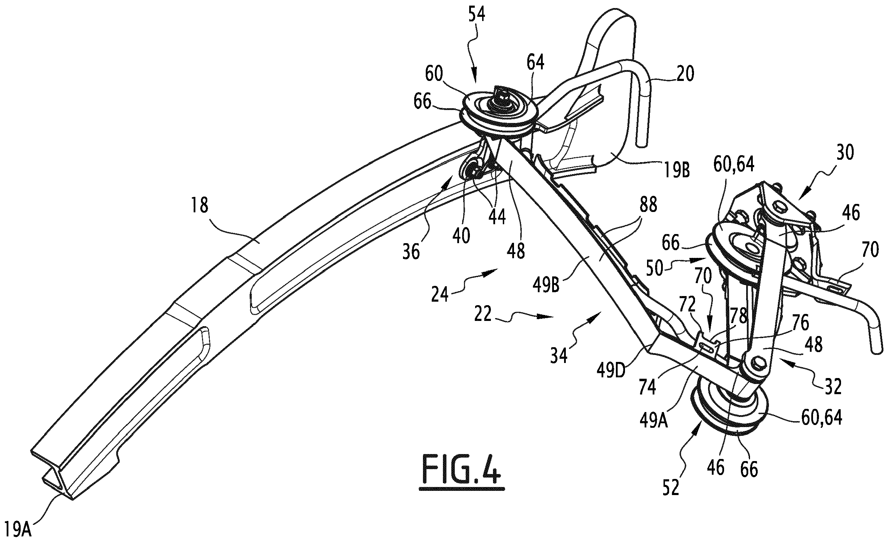

Les tronçons 30, 32, 34, 36 sont articulés les uns aux autres de façon à pouvoir pivoter les uns par rapport aux autres autour d'axes d'articulation A1, A2, A3 (Figures 1 et 2) entre une configuration repliée du bras articulé 24 lorsque le bec 14 est en position rétractée, visible sur la Figure 4, et une configuration dépliée du bras articulé 24 lorsque le bec 14 est en position déployée, visible sur la Figure 3. On distingue en particulier :
- un premier axe d'articulation A1, pour le pivotement du premier tronçon intermédiaire 32 par rapport au premier tronçon d'extrémité 30,
- un deuxième axe d'articulation A2, pour le pivotement du deuxième tronçon intermédiaire 34 par rapport au premier tronçon intermédiaire 32, et
- un troisième axe d'articulation A3, pour le pivotement de deuxième tronçon d'extrémité 36 par rapport au deuxième tronçon intermédiaire 34.

Ces axes d'articulation A1, A2, A3 sont concourants en un point de concours (non représenté). Ce point de concours est situé en-dessous du dispositif de guidage 22. Ce point de concours est un point de l'axe de rotation du bec 14.

En variante, les axes d'articulation A1, A2, A3 sont sensiblement concourants au niveau du point de concours, c'est-à-dire qu'il existe une sphère, centrée sur le point de concours et de diamètre inférieur à 20% de la longueur du bras articulé 24, traversée par chacun des axes d'articulation A1, A2, A3.

En particulier, le bras articulé 24 est adapté pour que, lors du passage de la configuration repliée vers la configuration dépliée :
- le premier tronçon intermédiaire 32 pivote, par rapport au premier tronçon d'extrémité 30, autour du premier axe d'articulation A1 dans un premier sens,
- le deuxième tronçon intermédiaire 34 pivote, par rapport au premier tronçon intermédiaire 32, autour du deuxième axe d'articulation A2 dans un deuxième sens, et
- le deuxième tronçon d'extrémité 36 pivote, par rapport au deuxième tronçon intermédiaire 34, autour du troisième axe d'articulation A3 dans le deuxième sens.

Le bras articulé 24 est configuré pour être dissimulé du flux aérodynamique au moyen du rail de guidage 18 lorsque le bec 14 est en position déployée. La perturbation du flux aérodynamique occasionnée par le dispositif de guidage 22 est ainsi limitée.

Le premier tronçon intermédiaire 32 est rectiligne.

Le deuxième tronçon intermédiaire 34 est coudé. Il comprend une première et une deuxième portions rectilignes 49A, 49B, et une troisième portion arquée 49C. La première portion 49A définit l'extrémité 46 d'articulation au premier tronçon intermédiaire 32. La troisième portion 49C définit l'extrémité 48 d'articulation au deuxième tronçon d'extrémité 36. La deuxième portion 49B est intercalée entre les première et troisième portions 49A, 49C. Un coude 49D relie les première et deuxième portions 49A, 49B.

Les courbures du coude 49D et de la troisième portion 49C sont orientées du même côté de la deuxième portion 49B. Ce côté est le côté opposé au mouvement du deuxième tronçon intermédiaire 34 lors du passage de la configuration repliée à la configuration dépliée.

Les moyens de guidage 26 comprennent au moins une bobine spiralée 50, 52, 54. Avantageusement, ils comprennent également des moyens 56 d'attache du câble 20 à certains des tronçons 30, 32, 34, 36, en particulier aux tronçons intermédiaires 32, 34.

La ou chaque bobine spiralée 50, 52, 54 est orientée suivant un axe d'enroulement. Cet axe d'enroulement est confondu avec un axe d'articulation A1, A2, A3.

La ou chaque bobine spiralée 50, 52, 54 est montée fixe en rotation sur un des tronçons 30, 32, 34, 36.

La ou chaque bobine spiralée 50, 52, 54 est adaptée pour l'enroulement du câble 20 autour de ladite bobine 50, 52, 54 de façon à ce que le câble 20 forme au moins une spire complète autour de l'axe d'enroulement de ladite bobine 50, 52, 54.

Le câble 20 est enroulé sur la ou chaque bobine spiralée 50, 52, 54, autour de l'axe d'enroulement, en formant au moins une spire. Il forme également une pluralité d'enroulements 58 successifs autour de l'axe d'enroulement de ladite bobine spiralée 50, 52, 54. On définit chaque enroulement 58 comme étant chaque passage du câble 20 dans un secteur angulaire de ladite bobine spiralée 50, 52, 54. Ainsi, même lorsque le câble 20 forme une unique spire autour d'une bobine spiralée 50, 52, 54, il forme néanmoins une pluralité d'enroulements 58 dans le secteur angulaire de la bobine spiralée 50, 52, 54 correspondant au point d'entrée du câble 20 sur la bobine spiralée 50, 52, 54.

La ou chaque bobine spiralée 50, 52, 54 comprend un organe d'espacement 60 pour maintenir les enroulements successifs 58 du câble 20 espacés les uns des autres suivant l'axe d'enroulement.

L'organe d'espacement 60 est formé en un matériau à faible frottement, par exemple en Téflon®.

En particulier, la ou chaque bobine spiralée 50, 52, 54 comprend une âme 62, sensiblement cylindrique, orientée suivant l'axe d'enroulement, et une nervure hélicoïdale 64 faisant saillie radialement depuis l'âme 62. On notera que l'orientation « radialement » est ici à entendre relativement à l'axe d'enroulement.

Avantageusement, l'âme 62 est également formée en un matériau à faible frottement. A défaut, l'âme 62 est recouverte d'un matériau à faible frottement.

La nervure hélicoïdale 64 délimite une gorge hélicoïdale 66, autour de l'âme 62, pour la réception du câble 20. Cette gorge hélicoïdale 66 a pour axe l'axe d'enroulement. Elle a une étendue angulaire supérieure à 360°, c'est-à-dire qu'elle forme au moins un tour complet autour de son axe.

La portion du câble 20 enroulée autour de la ou chaque bobine spiralée 50, 52, 54, s'étend dans la gorge hélicoïdale 66 de ladite bobine spiralée 50, 52, 54.

La nervure hélicoïdale 64 constitue l'organe d'espacement 60.

Les moyens d'attache 56 comprennent une pluralité d'ergots 70 portés chacun par un tronçon 30, 32, 34, 36 respectif. Chaque ergot 70 est solidaire de son tronçon 30, 32, 34, 36 respectif, et est de préférence venu de matière avec ledit tronçon respectif.

En particulier, au moins un ergot 70 est porté par chaque tronçon intermédiaire 32, 34. Dans les exemples représentés, le premier tronçon d'extrémité 30 porte également un ergot 70, et le deuxième tronçon d'extrémité 36 ne porte pas d'ergot 70.

Chaque ergot 70 présente un bord 72 et, à distance du bord 72, un orifice traversant 74. Chaque ergot 70 définit également une surface plane 76, entre le bord 72 et l'orifice traversant 74, de réception du câble 20. De préférence, comme représenté, le bord 72 présente une échancrure 78.

Le câble 20 repose contre la surface de réception 76 de chaque ergot 70. Pour chaque ergot 70, un collier de serrage (non représenté), typiquement un Ty-Rap®, est engagé dans l'orifice traversant 74 et dans l'échancrure 78, et entoure le câble 20. Le câble 20 est ainsi attaché à chaque ergot 70 et, par cet intermédiaire, aux tronçons 30, 32, 34 portant des ergots 70.

Le système de guidage 22 comprend également, de manière préférentielle et comme représenté sur les Figures 1, 3, 5 et 6, une plaque 100 d'attache du câble 20 au rail 18. Cette plaque d'attache 100 est fixée au rail 18, entre le deuxième tronçon d'extrémité 36 du bras articulé 24 et l'extrémité distale 19B du rail 18.

La plaque 100 est orientée sensiblement verticalement.

La plaque 100 présente une pluralité d'orifice traversants 102 (Figure 1), débouchant dans des faces opposées de la plaque 100. Au moins deux colliers de serrage (non représentés) sont engagés chacun dans un desdits orifices traversants 102 et entourent le câble 20, de façon à attacher le câble 20 à la plaque 100.

Dans la première variante, visible sur les Figures 3 et 4, le nombre de bobines spiralées 50, 52, 54 est égale au nombre d'axes d'articulation A1, A2, A3. Dans l'exemple représenté, les bobines spiralées 50, 52, 54 sont donc au nombre de trois. On distingue ainsi :
- une première bobine spiralée 50, orientée suivant un premier axe d'enroulement confondu avec le premier axe d'articulation A1,
- une deuxième bobine spiralée 52, orientée suivant un deuxième axe d'enroulement confondu avec le deuxième axe d'articulation A2, et
- une troisième bobine spiralée 54, orientée suivant un troisième axe d'enroulement confondu avec le troisième axe d'articulation A3.

Les gorges hélicoïdales 66 des bobines spiralées 50, 52, 54 tournent toutes dans un même sens autour de leurs axes respectifs.

La première bobine spiralée 50 est montée fixe en rotation sur premier tronçon intermédiaire 32, à son extrémité 46 d'articulation au premier tronçon d'extrémité 30. Chacune des deuxième et troisième bobines spiralées 52, 54 est montée fixe en rotation sur le deuxième tronçon intermédiaire 34, respectivement à son extrémité 46 d'articulation au premier tronçon intermédiaire 32, et à son extrémité 48 d'articulation au deuxième tronçon d'extrémité 36.

Le câble 20 est enroulé dans le premier sens autour de la première bobine spiralée 50, et dans le deuxième sens autour des deuxième et troisième bobines spiralées 52, 54. Ainsi, lorsque le bras articulé 24 passe de la configuration repliée à la configuration dépliée, le câble 20 s'enroule davantage sur chaque bobine spiralée 50, 52, 54 et, lorsque le bras articulé passe de la configuration dépliée à la configuration repliée, le câble 20 se déroule partiellement de chaque bobine spiralée 50, 52, 54. Cela permet de donner un peu de mou au câble 20 lorsque le bras articulé 24 est en configuration repliée, et limite l'usure du câble 20 liée à une sollicitation trop importante de celui-ci.

En particulier, le câble 20 entre en haut et sort en bas de la première bobine spiralée 50, et il entre en bas et sort en haut de chacune des deuxième et troisième bobines spiralées 52, 54.

On notera que, ici comme dans la suite, les indications concernant l'enroulement du câble 20 autour des bobines spiralées 50, 52, 54 sont faites en suivant le mouvement du câble 20 autour des bobines spiralées 50, 52, 54 depuis son extrémité de liaison à l'aile 12 jusqu'à son extrémité de liaison au bec 14.

Le premier tronçon intermédiaire 32 porte deux ergots 70.

Un premier ergot 70 est positionné à proximité de l'extrémité 46 d'articulation au premier tronçon d'extrémité 30. Il fait saillie depuis un bord inférieur 80 du premier tronçon intermédiaire 32, à l'opposé du mouvement du premier tronçon intermédiaire 32 lors du passage du bras 24 de la configuration repliée à la configuration dépliée.

Le deuxième ergot 70 est sensiblement à équidistance des extrémités 46 et 48. Il fait saillie vers le bas depuis une face inférieure 81 du premier tronçon intermédiaire 32.

Le deuxième tronçon intermédiaire 34 porte un unique ergot 70. Cet ergot 70 est positionné à proximité de l'extrémité 46 d'articulation au premier tronçon intermédiaire 32, dans la première portion 49A. Il fait saillie depuis un bord supérieur 82 du deuxième tronçon intermédiaire 34, à l'opposé du mouvement du deuxième tronçon intermédiaire 34 lors du passage de la configuration repliée à la configuration dépliée.

Les moyens de guidage 26 comprennent également, dans cette première variante, une rainure 84 de guidage du câble 20 le long d'une face supérieure 86 de la deuxième portion 49B du deuxième tronçon intermédiaire 34. Cette rainure 84 est formée entre deux nervures 88 faisant saillie vers le haut depuis ladite face supérieure 86.

Chaque nervure 88 s'étend du coude 49D jusqu'à la troisième portion 49C.

En particulier, les moyens de fixation 56 comprennent également des orifices traversant 90 formés dans l'une desdites nervures 88, ces orifices 90 débouchant de part et d'autre de la nervure 88, et étant répartis le long de la nervure 88 entre le coude 49D et la troisième portion 49C. Un collier de serrage (non représenté) s'étend dans chaque orifice traversant 90 et autour du câble 20, pour attacher le câble 20 à la nervure 88.

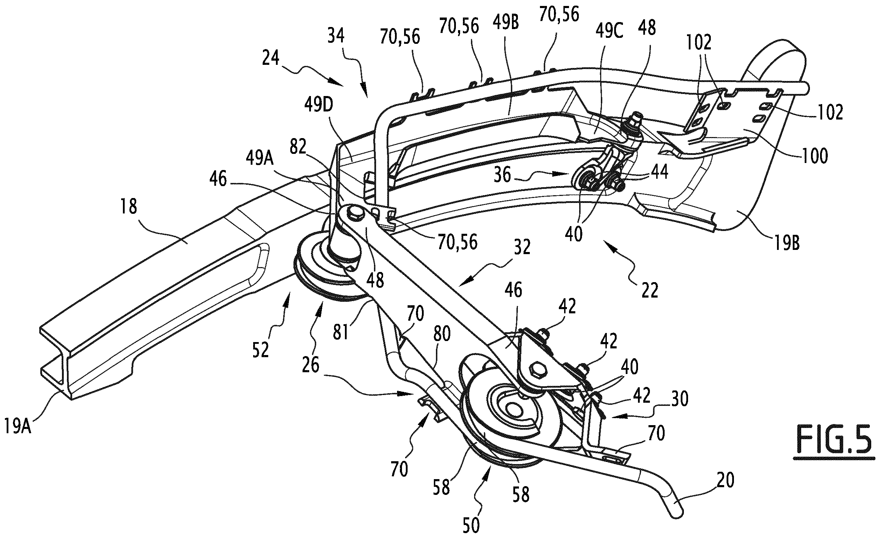

En référence à la Figure 5, dans la deuxième variante, les moyens de guidage 26 ne comprennent que deux bobines spiralées : les première et deuxième bobines spiralées 50, 52.

De même que dans la première variante, les gorges hélicoïdales 66 des bobines spiralées 50, 52 tournent toutes dans un même sens autour de leurs axes respectifs, la première bobine spiralée 50 est montée fixe en rotation sur le premier tronçon intermédiaire 32, et la deuxième bobine spiralée 52 est montée fixe en rotation sur le deuxième tronçon intermédiaire 34.

De même que dans la première variante, le câble 20 est enroulé dans le premier sens autour de la première bobine spiralée 50, et dans le deuxième sens autour de la deuxième bobine spiralée 52. Le câble 20 entre en haut et sort en bas de la première bobine spiralée 50, et il entre en bas et sort en haut de la deuxième bobine spiralée 52.

De même que dans la première variante, le premier tronçon intermédiaire 32 porte deux ergots 70, positionnés aux mêmes endroits et faisant saillie dans les mêmes directions que dans la première variante.

Le deuxième tronçon intermédiaire 34 porte une pluralité d'ergots 70.

Un premier desdits ergots 70 est positionné, de même que dans la première variante, à proximité de l'extrémité 46 d'articulation au premier tronçon intermédiaire 32, dans la première portion 49A. Il fait saillie depuis un bord supérieur 82 du deuxième tronçon intermédiaire 34, à l'opposé du mouvement du deuxième tronçon intermédiaire 34 lors du passage du bras 24 de la configuration repliée à la configuration dépliée.

Les autres ergots 70 font saillie vers le haut depuis la deuxième portion 49B.

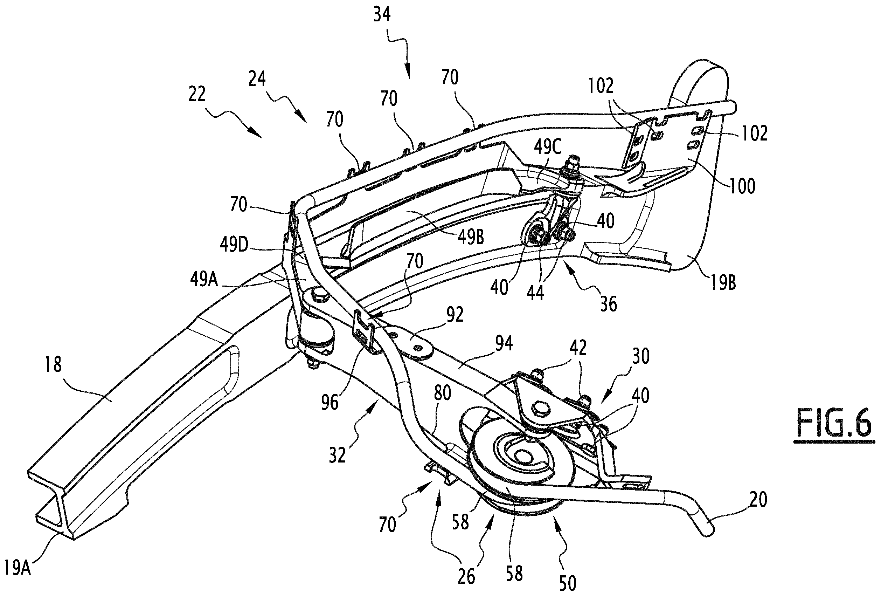

En référence à la Figure 6, dans la troisième variante, les moyens de guidage 26 ne comprennent qu'une unique bobine spiralée : la première bobine spiralée 50.

De même que dans les variantes précédentes, la bobine spiralée 50 est montée fixe en rotation sur le premier tronçon intermédiaire 32, à son extrémité 46 d'articulation au premier tronçon d'extrémité 30, et le câble 20 est enroulé dans le premier sens autour de la bobine spiralée 50, en entrant par le haut et en sortant par le bas.

De même que dans les variantes précédentes, le premier tronçon intermédiaire 32 porte deux ergots 70.

Un premier desdits ergots 70 est positionné, de même que dans les variantes précédentes, à proximité de l'extrémité 46 d'articulation au premier tronçon d'extrémité 30. Il fait saillie depuis un bord inférieur 80 du premier tronçon intermédiaire 32, à l'opposé du mouvement du premier tronçon intermédiaire 32 lors du passage du bras 24 de la configuration repliée à la configuration dépliée.

De manière spécifique à cette variante, le deuxième ergot 70 est solidaire d'une plaque 92 fixée à une face supérieure 94 du premier tronçon intermédiaire 32. Cette plaque 92 présente une extrémité 96 qui dépasse du premier tronçon intermédiaire 32, à l'opposé du mouvement du premier tronçon intermédiaire 32 lors du passage du bras 24 de la configuration repliée à la configuration dépliée. Le deuxième ergot 70 fait saillie vers le haut depuis cette extrémité 96.

De même que dans la deuxième variante, le deuxième tronçon intermédiaire 34 porte une pluralité d'ergots 70.

A la différence de la deuxième variante, le premier desdits ergots 70, qui est positionné à proximité de l'extrémité 46 d'articulation au premier tronçon intermédiaire 32, dans la première portion 49A, fait saillie vers le haut depuis la première portion 49A.

De même que dans la deuxième variante, les autres ergots 70 font saillie vers le haut depuis la deuxième portion 49B.

Un procédé de guidage du câble 20 au moyen d'un dispositif de guidage 22 selon l'une quelconque des variantes précédentes va maintenant être décrit.

Dans un premier temps, le bec 14 est en position rétractée. Le bras articulé 24 est alors dans sa configuration repliée, et il est logé intégralement dans l'aile 12. Le câble 20 est enroulé autour de la ou chaque bobine spiralée 50, 52, 54, et est attaché au premier tronçon d'extrémité 30 et aux tronçons intermédiaires 32, 34 au moyen des colliers de serrage et des ergots 70.

Dans un deuxième temps, le bec 14 est déployé. Le bras articulé 24 passe alors dans sa configuration dépliée. Le premier tronçon intermédiaire 32 demeure logé dans l'aile 12, pendant que la deuxième portion 49B du deuxième tronçon intermédiaire 34 sort de l'aile 12 et vient se positionner au-dessus du rail 18. Le câble 20 demeure attaché aux tronçons 30, 32, 34, et s'enroule davantage autour de la ou chaque bobine spiralée 50, 52, 54.

Dans un troisième temps, le bec 14 est rétracté. Le bras articulé 24 revient alors se loger dans l'aile 12, dans sa configuration repliée. La deuxième portion 49B du deuxième tronçon intermédiaire 34 s'écarte du rail 18. Le câble 20 demeure attaché aux tronçons 30, 32, 34, et se déroule partiellement de la ou chaque bobine spiralée 50, 52, 54, tout en demeurant enroulé autour de la ou chaque bobine spiralée 50, 52, 54.

Grâce à l'invention décrite ci-dessus, l'usure du câble 20 au niveau des articulations du bras 24 est minimisée.

En outre, il est possible de faire pivoter les différents tronçons 30, 32, 34, 36 du bras 24 les uns par rapport aux autres sur de grandes plages angulaires sans solliciter excessivement le câble 20. Il est ainsi possible de rapprocher considérablement les tronçons 30, 32, 34, 36 les uns des autres lorsque le bras 24 est dans sa configuration repliée, ce qui permet de minimiser l'encombrement du dispositif de guidage 22 lorsque le bec 14 est rétracté.

Enfin, le dispositif de guidage 22 ne perturbe pas le flux aérodynamique de l'aéronef.

## Revendications

1. Dispositif mobile (22) de guidage de câble, comprenant un bras articulé (24) comportant un premier, un deuxième et un troisième tronçons (30, 32, 34), le premier et le deuxième tronçons (30, 32) étant articulés l'un à l'autre de façon à pouvoir pivoter l'un par rapport à l'autre autour d'un premier axe d'articulation (A1),
le deuxième tronçon (32) étant une bielle, articulée au premier tronçon (30) par l'une de ses extrémités (46), le troisième tronçon (34) étant articulé à l'autre extrémité (48) de la bielle de façon à pouvoir pivoter par rapport au deuxième tronçon (32) autour d'un deuxième axe d'articulation (A2),
le dispositif de guidage (22) comprenant en outre des moyens de guidage (26) d'un câble (20) le long du bras articulé (24),
les moyens de guidage (26) comprenant une première bobine spiralée (50) orientée suivant un premier axe d'enroulement confondu avec le premier axe d'articulation (A1), pour l'enroulement du câble (20) autour de ladite première bobine spiralée (50) en formant au moins une spire, la première bobine spiralée (50) comprenant un organe d'espacement (60) pour maintenir les enroulements successifs du câble (20) autour du premier axe d'enroulement espacés les uns des autres suivant le premier axe d'enroulement,
**caractérisé en ce que**
l'organe d'espacement (60) est formé en un matériau à faible frottement,
et **en ce que** les premier et deuxième axes d'articulation (A1, A2) sont sécants, le troisième tronçon (34) présentant une rainure (84) de réception du câble (20), débouchant à l'opposé du point d'intersection des premier et deuxième axes d'articulation (A1, A2).

2. Dispositif de guidage (22) selon la revendication 1, dans lequel les moyens de guidage (26) comprennent une deuxième bobine spiralée (52) orientée suivant un deuxième axe d'enroulement, pour l'enroulement du câble (20) autour de ladite deuxième bobine spiralée (52) en formant au moins une spire, la deuxième bobine spiralée (52) comprenant un organe d'espacement (60) pour maintenir les enroulements successifs du câble (20) autour du deuxième axe d'enroulement espacés les uns des autres suivant le deuxième axe d'enroulement.

3. -Dispositif de guidage (22) selon l'une quelconque des revendications précédentes, dans lequel le troisième tronçon (34) est une bielle, articulée au deuxième tronçon (32) par l'une de ses extrémités (46), et le bras articulé (24) comprend un quatrième tronçon (36), articulé à l'autre extrémité (48) de la bielle de façon à pouvoir pivoter par rapport au troisième tronçon (34) autour d'un troisième axe d'articulation (A3).

4. Dispositif de guidage (22) selon la revendication précédente, dans lequel les premier, deuxième et troisième axes d'articulation (A1, A2, A3) sont sensiblement concourants.

5. -Dispositif de guidage (22) selon l'une quelconque des revendications précédentes, lorsqu'elles dependent de la revendication 2, dans lequel les moyens de guidage (26) comprennent une troisième bobine spiralée (54) orientée suivant un troisième axe d'enroulement, pour l'enroulement du câble (20) autour de ladite troisième bobine spiralée (54) en formant au moins une spire, la troisième bobine spiralée (54) comprenant un organe d'espacement (60) pour maintenir les enroulements successifs du câble (20) autour du troisième axe d'enroulement espacés les uns des autres suivant le troisième axe d'enroulement.

6. -Dispositif de guidage (22) selon l'une quelconque des revendications précédentes, lorsqu'elles dépendent de la revendication 3, dans lequel le quatrième tronçon (36) comprend des moyens (40) de fixation du bras articulé (24) à un rail (18) de guidage d'un bec de bord d'attaque d'aéronef.

7. -Dispositif de guidage (22) selon l'une quelconque des revendications précédentes, dans lequel le premier tronçon (30) comprend des moyens (40) de fixation du bras articulé (24) à un élément de structure d'une aile d'aéronef.

8. -Dispositif de guidage (22) selon l'une quelconque des revendications précédentes, dans lequel la ou chaque bobine spiralée (50, 52, 54) comprend une gorge hélicoïdale (66) de réception du câble (20), ayant pour axe l'axe d'enroulement.

9. -Dispositif de guidage (22) selon l'une quelconque des revendications précédentes, dans lequel ledit organe d'espacement (60) est constitué par une nervure hélicoïdale (64).

10. -Aéronef comprenant deux éléments (12, 14) mobiles l'un par rapport à l'autre, un dispositif électrique logé dans l'un desdits éléments mobiles (12, 14), un câble électrique (20) d'alimentation du dispositif électrique, et un dispositif de guidage (22) selon l'une quelconque des revendications précédentes, pour le guidage du câble d'alimentation (20) entre les deux éléments mobiles (12, 14).

11. Aéronef selon la revendication 10, dans lequel un premier (12) desdits éléments mobiles est une aile de l'aéronef, et le deuxième élément mobile (14) est un bec de bord d'attaque, articulé à l'aile.

12. Aéronef selon la revendication 10 ou 11, lorsqu'elles dépendent de la revendication 4, dans lequel les premier, deuxième et troisième axes d'articulation (A1, A2, A3) se coupent en un point situé sensiblement sur un axe de rotation des éléments mobiles (12, 14) l'un par rapport à l'autre.

## Patentansprüche

1. Bewegliche Kabelführungsvorrichtung (22), enthaltend einen Gelenkarm (24) mit einem ersten, einem zweiten und einem dritten Abschnitt (30, 32, 34), wobei der erste und der zweite Abschnitt (30, 32) so aneinander angelenkt sind, dass sie um eine erste Gelenkachse (A1) herum zueinander verschwenkbar sind,
wobei der zweite Abschnitt (32) ein Schwenkarm ist, der mit einem seiner Enden (46) am ersten Abschnitt (30) angelenkt ist, wobei der dritte Abschnitt (34) am anderen Ende (48) des Schwenkarms so angelenkt ist, dass er um eine zweite Gelenkachse (A2) herum bezüglich des zweiten Abschnitts (32) verschwenkbar ist,
wobei die Führungsvorrichtung (22) ferner Führungsmittel (26) zum Führen eines Kabels (20) entlang des Gelenkarms (24) aufweist,
wobei die Führungsmittel (26) eine erste spiralförmige Spule (50), die entlang einer mit der ersten Gelenkachse (A1) zusammenfallenden ersten Wicklungsachse ausgerichtet ist, zum Aufwickeln des Kabels (20) um die erste spiralförmige Spule (50) unter Ausbildung zumindest einer Windung enthalten, wobei die erste spiralförmige Spule (50) einen Abstandshalter (60) aufweist, um die aufeinanderfolgenden Wicklungen des Kabels (20) um die erste Wicklungsachse entlang der ersten Wicklungsachse beabstandet zu halten,
**dadurch gekennzeichnet, dass**
der Abstandshalter (60) aus einem Material mit geringer Reibung ausgebildet ist, und dass
die erste und die zweite Gelenkachse (A1, A2) sich schneiden, wobei der dritte Abschnitt (34) eine Rille (84) zum Aufnehmen des Kabels (20) aufweist, die dem Schnittpunkt der ersten und der zweiten Gelenkachse (A1, A2) entgegengesetzt ausmündet.

2. Führungsvorrichtung (22) nach Anspruch 1, wobei die Führungsmittel (26) eine zweite spiralförmige Spule (52), die entlang einer zweiten Wicklungsachse ausrichtet ist, zum Aufwickeln des Kabels (20) um die zweite spiralförmige Spule (52) unter Ausbildung zumindest einer Windung enthalten, wobei die zweite spiralförmige Spule (52) einen Abstandshalter (60) aufweist, um die aufeinanderfolgenden Wicklungen des Kabels (20) um die zweite Wicklungsachse entlang der zweiten Wicklungsachse voneinander beabstandet zu halten.

3. Führungsvorrichtung (22) nach einem der vorangehenden Ansprüche, wobei der dritte Abschnitt (34) ein Schwenkarm ist, der mit einem seiner Enden (46) am zweiten Abschnitt (32) angelenkt ist, wobei der Gelenkarm (24) einen vierten Abschnitt (36) enthält, der am anderen Ende (48) des Schwenkarms so angelenkt ist, dass er um eine dritte Gelenkachse (A3) bezüglich des dritten Abschnitts (34) verschwenkbar ist.

4. Führungsvorrichtung (22) nach dem vorangehenden Anspruch, wobei die erste, die zweite und die dritte Gelenkachse (A1, A2, A3) im Wesentlichen konvergent verlaufen.

5. Führungsvorrichtung (22) nach einem der vorangehenden Ansprüche in Abhängigkeit von Anspruch 2, wobei die Führungsmittel (26) eine dritte spiralförmige Spule (54), die entlang einer dritten Wicklungsachse ausgerichtet ist, zum Aufwickeln des Kabels (20) um die dritte spiralförmige Spule (54) unter Ausbildung zumindest einer Windung enthalten, wobei die dritte spiralförmige Spule (54) einen Abstandshalter (60) aufweist, um die aufeinanderfolgenden Wicklungen des Kabels (20) um die dritte Wicklungsachse entlang der dritten Wicklungsachse voneinander beabstandet zu halten.

6. Führungsvorrichtung (22) nach einem der vorangehenden Ansprüche in Abhängigkeit von Anspruch 3, wobei der vierte Abschnitt (36) Befestigungsmittel (40) zum Befestigen des Gelenkarms (24) an eine Führungsschiene (18) zum Führen einer Nase einer Anströmkante eines Luftfahrzeugs enthält.

7. Führungsvorrichtung (22) nach einem der vorangehenden Ansprüche, wobei der erste Abschnitt (30) Befestigungsmittel (40) zum Befestigen des Gelenkarms (24) an ein Strukturelement eines Flügels eines Luftfahrzeugs enthält.

8. Führungsvorrichtung (22) nach einem der vorangehenden Ansprüche, wobei die bzw. jede spiralförmige Spule (50, 52, 54) eine wendelförmige Nut (66) zum Aufnehmen des Kabels (20) aufweist, die als Achse die Wicklungsachse hat.

9. Führungsvorrichtung (22) nach einem der vorangehenden Ansprüche, wobei der Abstandshalter (60) aus einer wendelförmigen Rippe (64) besteht.

10. Luftfahrzeug mit zwei zueinander beweglichen Elementen (12, 14), einer elektrischen Vorrichtung, die in einem der beweglichen Elemente (12, 14) untergebracht ist, einem Stromkabel (20) zum Versorgen der elektrischen Vorrichtung, und einer Führungsvorrichtung (22) nach einem der vorangehenden Ansprüche zum Führen des Versorgungskabels (20) zwischen den beiden beweglichen Elementen (12, 14).

11. Luftfahrzeug nach Anspruch 10, wobei ein erstes (12) der beweglichen Elemente ein Flügel des Luftfahrzeugs ist und das zweite bewegliche Element (14) die Nase einer Anströmkante ist, die am Flügel angelenkt ist.

12. Luftfahrzeug nach Anspruch 10 oder 11 in Abhängigkeit von Anspruch 4, wobei sich die erste, die zweite und die dritte Gelenkachse (A1, A2, A3) in einem Punkt schneiden, der im Wesentlichen auf einer Drehachse der zueinander beweglichen Elemente (12, 14) liegt.

## Claims

1. Movable cable guiding device (22), comprising an articulated arm (24) having a first, a second and a third section (30, 32, 34), the first and second sections (30, 32) being articulated with one another so as to be able to pivot relative to one another about a first articulation axis (A1),
the second section (32) being a rod which is articulated with the first section (30) by one of its ends (46), the third section (34) being articulated with the other end (48) of the rod so as to be able to pivot relative to the second section (32) about a second articulation axis (A2),
the guiding device (22) further comprising guiding means (26) for guiding a cable (20) along the articulated arm (24),
the guiding means (26) comprising a first spiral reel (50) which is oriented along a first winding axis, coincident with the first articulation axis (A1), for winding the cable (20) about said first spiral reel (50) to form at least one winding, the first spiral reel (50) comprising a spacer member (60) for keeping the successive windings of the cable (20) about the first winding axis spaced apart from one another along the first winding axis,
**characterised in that** the spacer member (60) is formed of a low-friction material,
and **in that** the first and second articulation axes (A1, A2) intersect, the third section (34) having a channel (84) for receiving the cable (20), which channel opens opposite the point of intersection of the first and second articulation axes (A1, A2).

2. Guiding device (22) according to claim 1, wherein the guiding means (26) comprise a second spiral reel (52) which is oriented along a second winding axis, for winding the cable (20) about said second spiral reel (52) to form at least one winding, the second spiral reel (52) comprising a spacer member (60) for keeping the successive windings of the cable (20) about the second winding axis spaced apart from one another along the second winding axis.

3. Guiding device (22) according to any one of the preceding claims, wherein the third section (34) is a rod which is articulated with the second section (32) by one of its ends (46), and the articulated arm (24) comprises a fourth section (36) which is articulated with the other end (48) of the rod so as to be able to pivot relative to the third section (34) about a third articulation axis (A3).

4. Guiding device (22) according to the preceding claim, wherein the first, second and third articulation axes (A1, A2, A3) are substantially concurrent.

5. Guiding device (22) according to any one of the preceding claims, when they are dependent on claim 2, wherein the guiding means (26) comprise a third spiral reel (54) which is oriented along a third winding axis, for winding the cable (20) about said third spiral reel (54) to form at least one winding, the third spiral reel (54) comprising a spacer member (60) for keeping the successive windings of the cable (20) about the third winding axis spaced apart from one another along the third winding axis.

6. Guiding device (22) according to any one of the preceding claims, when they are dependent on claim 3, wherein the fourth section (36) comprises means (40) for fixing the articulated arm (24) to a guiding rail (18) of an aircraft leading edge slat.

7. Guiding device (22) according to any one of the preceding claims, wherein the first section (30) comprises means (40) for fixing the articulated arm (24) to a structural element of an aircraft wing.

8. Guiding device (22) according to any one of the preceding claims, wherein the or each spiral reel (50, 52, 54) comprises a helical groove (66) for receiving the cable (20), the axis of which groove is the winding axis.

9. Guiding device (22) according to any one of the preceding claims, wherein said spacer member (60) is formed by a helical rib (64).

10. Aircraft comprising two elements (12, 14) which are movable relative to one another, an electrical device housed in one of said movable elements (12, 14), an electrical power cable (20) for the electrical device, and a guiding device (22) according to any one of the preceding claims, for guiding the power cable (20) between the two movable elements (12, 14).

11. Aircraft according to claim 10, wherein a first (12) of said movable elements is a wing of the aircraft and the second movable element (14) is a leading edge slat, articulated with the wing.

12. Aircraft according to claim 10 or 11, when they are dependent on claim 4, wherein the first, second and third articulation axes (A1, A2, A3) intersect at a point situated substantially on an axis of rotation of the movable elements (12, 14) relative to one another.
